# EUROPÄISCHE PATENTSCHRIFT

(11) **EP 1 774 291 B1**
(45) Veröffentlichungstag und Bekanntmachung des Hinweises auf die Patenterteilung: **11.04.2012**
(21) Anmeldenummer: 05775018.4
(22) Anmeldetag: 28.07.2005
(51) Int. Cl.: G01N 21/55, G01N 25/68

(54) **VORRICHTUNG ZUM BESTIMMEN DER TAUPUNKTTEMPERATUR EINES MESSGASES**
DEVICE FOR DETERMINING THE DEW-POINT TEMPERATURE OF A TEST GAS
DISPOSITIF DE DETERMINATION DE LA TEMPERATURE DE POINT DE ROSEE D'UN GAZ DE MESURE

(30) Priorität: 06.08.2004 DE 102004038397
(43) Veröffentlichungstag der Anmeldung: 18.04.2007
(73) Patentinhaber: BARTEC BENKE GmbH, 21465 Reinbek/Hamburg (DE)
(72) Erfinder: BÖHM, Alfred, 94234 Viechtach (DE); BINDER, Wilhelm, 94113 Tiefenbach (DE)
(74) Vertreter: Heim, Hans-Karl
(86) Internationale Anmeldenummer: PCT/EP2005/008219
(87) Internationale Veröffentlichungsnummer: WO 2006/015734

(56) Entgegenhaltungen:
- DE-A1- 10 056 771
- DE-A1- 19 708 053
- DE-U1- 20 012 060
- US-A- 3 856 404
- US-A- 5 396 325
- SHIGEAKI MATSUMOTO: "THE MEASUREMENT OF TINY DEW DROPLETS AT THE INITIAL DEPOSITION STAGE AND DEW POINT USING A PHASE-SHIFT INTERFERENCE MICROSCOPE" MEASUREMENT SCIENCE AND TECHNOLOGY, IOP PUBLISHING, BRISTOL, GB, Bd. 14, Nr. 12, Dezember 2003 (2003-12), Seiten 2075-2080, XP001201856 ISSN: 0957-0233 in der Anmeldung erwähnt
- SYED H Z ET AL: "Effects of water salinity, electric stress and temperature on the hydrophobicity of polytetrafluoroethylene", ELECTRICAL INSULATION AND DIELECTRIC PHENOMENA, 1998. ANNUAL REPORT. C ONFERENCE ON ATLANTA, GA, USA 25-28 OCT. 1998, NEW YORK, NY, USA,IEEE, US LNKD- DOI:10.1109/CEIDP.1998.733865, vol. 1, 25 October 1998 (1998-10-25), pages 100-103, XP010315253, ISBN: 978-0-7803-5035-9

## Beschreibung

Die Erfindung betrifft eine Vorrichtung zum Bestimmen der Taupunkttemperatur eines Messgases, mit einem Lichtleiter, einer auf dem Lichtleiter angeordneten Kondensationsoberfläche, deren Reflexionsvermögen von der Kondensation des Messgases abhängt, einer Lichtquelle zum Aussenden von Licht durch den Lichtleiter auf die Kondensationsoberfläche, einem Lichtsensor zum Ermitteln der von der Kondensationsoberfläche in den Lichtleiter zurück reflektierten Lichtintensität, und Mitteln zum Einstellen der Temperatur der Kondensationsoberfläche, gemäß dem Oberbegriff des Anspruchs 1.

Taupunktsensoren und Verfahren zum Bestimmen der Taupunkttemperatur eines Messgases sind bekannt. Diesen Sensoren und Verfahren liegt der Gedanke zugrunde, dass ein Gas in Abhängigkeit von seiner Temperatur in der Lage ist, lediglich eine bestimmte Menge an Wasserdampf aufzunehmen. Diese Wassermenge steigt mit zunehmender Temperatur.

Wird ein wasserdampfhaltiges Gas unter die so genannte Taupunkttemperatur abgekühlt, fällt überschüssiger Wasserdampf aus und es kommt zur Kondensation. Dieser Kondensationseffekt kann messtechnisch ausgenutzt werden.

So ist beispielsweise aus der DE 199 15 095 A1 ein so genanntes Tauspiegel-Hygrometer bekannt. Dieses bekannte Hygrometer weist einen Tauspiegel auf, der von einer Lichtquelle beschienen wird, und der mit dem Messgas in Kontakt steht. Das von dem Tauspiegel reflektierte und/oder gestreute Licht wird von einem Photoempfänger detektiert. Wird nun durch Veränderung der Temperatur des Tauspiegels die Taupunkttemperatur des Messgases erreicht, so schlägt sich Kondensat auf dem Tauspiegel nieder. In diesem Moment tritt eine Veränderung des Reflexionsvermögens und/oder Streuvermögens des Tauspiegels ein, und folglich verändert sich die vom Photoempfänger nachgewiesene Lichtintensität.

Bei der aus der DE 199 15 095 A1 bekannten Vorrichtung wird das Licht von der Lichtquelle zum Tauspiegel und von dort zum Photoempfänger unmittelbar durch das Messgas geführt. Dabei können gegebenenfalls im Messgas vorhandene Verunreinigungen, Wassertropfen und/oder Eiskristalle, die ebenfalls Licht absorbieren und/oder streuen, zu einer Verfälschung des Messsignales am Photoempfänger führen. Darüber hinaus können sich gegebenenfalls im Messgas vorhandene Verschmutzungen auf der Oberfläche des Tauspiegels niederschlagen, was ebenfalls zu einer Verfälschung des Messsignals führen kann.

Eine weitere Vorrichtung zum Bestimmen der Taupunkttemperatur ist in der DE 200 12 060 U1 beschrieben. Bei dieser gattungsgemäßen Vorrichtung verläuft der Lichtweg von der Lichtquelle zum Lichtsensor im Wesentlichen durch ein Medium, welches von dem Messgas verschieden ist. Hierdurch kann eine unerwünschte Absorption und/oder Streuung des Lichtes durch das Messgas sowie eine unerwünschte Verschmutzung des Lichtweges weitestgehend verhindert werden. Gemäß der Lehre der DE 200 12 060 U1 wird das Licht durch einen Lichtleiter zu Kondensationsbereichen geführt, die auf der Oberfläche des Lichtleiters angeordnet sind, und die mit dem Messgas in Kontakt stehen. Schlägt sich in den Kondensationsbereichen ein Kondensat nieder, so ändert sich dort der Grenzwinkel für die Totalreflexion des Lichtes. Dies kann zu einer Lichtauskopplung führen, die am Lichtsensor als Änderung der Lichtintensität nachgewiesen werden kann. Um die Kondensation des Messgases auf die Kondensationsbereiche zu konzentrieren, sind diese Bereiche gemäß der DE 200 12 060 U1 an ihrer Oberfläche hydrophil ausgebildet, während die restlichen Bereiche hydrophob ausgebildet sind.

Ein weiterer Taupunktsensor, bei dem Licht durch einen Lichtleiter hindurchgeleitet wird und an dessen Oberfläche kondensationsabhängig in den Lichtleiter zurück reflektiert wird, ist aus der US 3,528,278 bekannt.

In der DE 100 56 771 C2 wird vorgeschlagen, auf der sensitiven Oberfläche von Taupunkt-Feuchtesensoren periodisch angeordnete, hydrophile Flächen vorzusehen, die von hydrophoben Bereichen umgeben sind. Die hydrophilen Flächen können insbesondere dazu dienen, ein Einsetzen des Kondensationsvorganges bereits vor Erreichen der Taupunkttemperatur hervorzurufen. Hierbei werden die hydrophilen Bereiche benetzt, wobei mit zunehmender Kondensationszeit Tröpfchen mit relativ steilem Benetzungswinkel gebildet werden können. Bei derart ausgestalteten Sensoren können jedoch unter Umständen vergleichsweise hohe Kondensationszeiten auftreten, wobei die Sensoren dann vergleichsweise langsam reagieren können.

Die DE 35 43 155 C2 offenbart einen optischen Taupunktsensor mit einem Lichtwellenleiter, der auf seiner Oberfläche eine Aufrauung aufweist. Ist diese Aufrauung unbenetzt, tritt ein erheblicher Anteil des in den Lichtwellenleiter eingekoppelten Lichtes durch die Aufrauung aus. Ist dagegen die aufgeraute Stelle nach Unterschreiten des Taupunktes benetzt, so ist der Lichtintensitätsverlust an dieser Stelle geringer.

Ein weiteres optisches Taupunktmessgerät ist aus der EP 0 843 174 A1 bekannt. Mit diesem bekannten Taupunktmessgerät wird eine Kondensatschicht nachgewiesen, die sich auf einer gekühlten gebogenen Lichtleitfaser ausbildet.

Ein weiterer optischer Sensor, mit dem die Bildung von Wassertröpfchen auf einer Messoberfläche anhand einer Änderung der Reflektivität der Oberfläche nachgewiesen werden kann, ist aus der US 5,396,325 bekannt.

Der Aufsatz von Lance D. Eske, David W. Galipeau "Characterization of SiO2 surface treatments using AFM, contact angles and a novel dewpoint technique", veröffentlicht in Colloids and Surfaces A, 154 (1999) 33-51, beschreibt die Verwendung von akustischen Oberflächenwellensensoren (SAW) zum Nachweis der Betauung einer Oberfläche.

Ein weiteres Tauspiegel-Hygrometer beschreibt der Aufsatz "The measurement of tiny dew droplets at the initial deposition stage and dew point using a phase-shift interference microscope" von Shigeaki Matsumoto, veröffentlicht in der Zeitschrift "Measurement Science and Technology", 14 (2003) 2075 - 2080.

Die US 5,396,325 A lehrt einen Sensor zum Erkennen einer Flüssigkeit basierend auf optischen Messprinzipien. Dieser Sensor kann dazu verwendet werden, den Kondensationspunkt oder den Gefrierpunkt von verschiedenen Flüssigkeiten zu bestimmen. Im Bezug auf einen Öllecksensor ist beschrieben, dass die Kondensationsoberfläche bzw. die Detektionsoberfläche aus einem porösen PTFE-Material bestehen kann.

Die DE 100 56 771 A1 beschreibt einen Taupunktfeuchtesensor, der im Wesentlichen eine ebene Oberfläche aufweist, welche periodisch hydrophile Flächen aufweisen, die von hydrophoben Bereichen umgeben sind. Hierdurch sollen insbesondere genauere Ergebnisse bei Messungen erreicht werden, wenn Verschmutzungen vorliegen.

**Aufgabe** der Erfindung ist es, eine Vorrichtung zum Bestimmen der Taupunkttemperatur eines Messgases anzugeben, die eine besonders hohe Messgenauigkeit aufweist, und die insbesondere in großen Mengen besonders wirtschaftlich produziert werden kann.

Die Aufgabe wird erfindungsgemäß durch eine Vorrichtung mit den Merkmalen des Anspruchs 1 gelöst. Bevorzugte Ausführungsbeispiele sind in den abhängigen Ansprüchen angegeben.

Ein erster Aspekt der Erfindung kann darin gesehen werden, dass die Kondensationsoberfläche semihydrophob ausgebildet ist.

Diesem ersten Erfindungsaspekt liegt die Erkenntnis zugrunde, dass auf einer vorbekannten hydrophilen Kondensationoberfläche bei Unterschreiten der Taupunkttemperatur ein im Wesentlichen glatter Wasserfilm von geringer Dicke gebildet wird, dessen Oberfläche am Übergang zum Messgas etwa parallel zur Kondensationsoberfläche verläuft. An dieser parallelen Oberfläche des Wasserfilms wird jedoch aus dem Lichtleiter austretendes Licht reflektiert, gegebenenfalls sogar total reflektiert, und in den Lichtleiter auf den Lichtsensor zurück gekoppelt. Durch diese Zurückkopplung von Licht in den Lichtleiter wird der Anteil des bei Betauung der Kondensationsoberfläche ausgekoppelten Lichtes verringert und somit die Genauigkeit, insbesondere das Signal-RauschVerhältnis, der Vorrichtung reduziert.

Im Gegensatz hierzu bildet sich auf der erfindungsgemäß semihydrophoben Kondensationsoberfläche in der Regel kein glatter Wasserfilm aus, sondern eine Vielzahl von kleinen Tröpfchen, die aufgrund ihrer Geometrie zur Auslenkung des Lichtes führen. Insbesondere ist eine Zurückkopplung des an der Kondensationsoberfläche in die Tröpfchen ausgekoppelten Lichtes in den Lichtleiter und/oder den Lichtsensor in der Regel nicht gegeben, wodurch die Präzision der erfindungsgemäßen Vorrichtung gegenüber dem vorbekannten Stand der Technik erhöht ist.

Neben der Taupunktbestimmung kann die erfindungsgemäße Vorrichtung auch zur Bestimmung des Frostpunktes verwendet werden. Bei Erreichen des Frostpunktes bilden sich auf der semihydrophoben Kondensationsoberfläche Eiskristalle aus, die das Licht ebenfalls auslenken.

In Experimenten mit semihydrophoben Kondensationsoberflächen hat sich gezeigt, dass selbst Tröpfchen, die sich im Anfangsstadium nach Unterschreiten des Taupunktes bilden, und die mit bloßem Auge nicht sichtbar sind, aufgrund ihrer Geometrie bereits zur zuverlässigen Auslenkung des Lichtes führen. Infolgedessen wurden am Lichtsensor deutliche Intensitätsabnahmen des Messsignals bei Betauung beobachtet. Selbst bei starkem Tröpfchenwachstum nach einer Betauungsdauer von etwa einer halben Stunde war hierbei keine Filmbildung erkennbar. Vielmehr waren die Betauungströpfchen homogen über der betauten Oberfläche verteilt.

Unter einer semihydrophoben Oberfläche kann insbesondere eine solche Oberfläche verstanden werden, auf der mit beginnender Kondensation eine Tröpfchenbildung einsetzt.

Eine semihydrophobe Oberfläche kann beispielsweise dadurch gekennzeichnet sein, dass sich auf ihr, in Luft als Messgas, mit Wasser ein Kontaktwinkel einstellt, der größer als 25° , 30° , 40° , 50° , 60° oder 70° ist
und kleiner als 110° oder 90° ist. Eine semihydrophobe Oberfläche hat somit Oberflächeneigenschaften, insbesondere Oberflächenenergien, die zwischen denen von hydrophoben und hydrophilen Oberflächen liegen. Der Kontaktwinkel ist geeigneterweise nicht allzu groß, so dass sich bei gleichem Tröpfchenvolumen eine große Kontaktoberfläche mit der Kondensationsoberfläche und somit ein großer Lichteinkoppelbereich zum Lichtleiter einstellt. Insbesondere kann der Kontaktwinkel im Bereich zwischen 50° und 90° liegen und/oder vorzugsweise 40° +/- 5°, 45° +/- 10° oder 80° +/- 5° betragen.

Besonders vorteilhaft ist es nach der Erfindung, dass die Kondensationsoberfläche durchgängig semihydrophob, insbesondere mit etwa gleich bleibendem Kontaktwinkel zu einer kondensierenden Phase des Messgases, ausgebildet ist. Bei der kondensierenden Phase kann es sich insbesondere um Wasser handeln, bei dem Messgas um Luft. Gemäß dieser Ausführungsform weist die Kondensationsoberfläche also über ihrer gesamten Ausdehung zumindest annähernd gleiche Oberflächeneigenschaften, insbesondere Oberflächenenergien auf. Hierdurch kann eine besonders gute Homogenität der Betauungströpfchen und somit eine besonders präzise Bestimmung der Taupunkttemperatur ermöglicht werden.

Weiterhin ist vorteilhaft, dass der Kontaktwinkel der semihydrophoben Kondensationsoberfläche zu der kondensierenden Phase des Messgases größer als 30 , bevorzugt größer als 40°, 50° oder 60° ist. Daneben ist der Kontaktwinkel der semihydrophoben Kondensationsoberfläche zu der kondensierenden Phase des Messgases klei-ner als 110° , bevorzugt kleiner als 90° ist.

Besonders bevorzugt ist es nach der Erfindung, dass der Lichtleiter, insbesondere im Bereich der Kodensationsoberfläche, Glas, ein Halbleitermaterial, beispielsweise Silizium, und/oder ein Kunststoffmaterial, beispielsweise Polykarbonat, aufweist. Der Lichtleiter kann auch als Substrat bezeichnet werden. Als Glas kann insbesondere Quarzglas oder Borosilika Floatglas bzw. Borofloatglas Verwendung finden. Daneben kann der Lichtleiter beispielsweise auch kristallines Quarz, Saphir oder Diamant aufweisen. Vorteilhafterweise ist die Kondensationsoberfläche unmittelbar an der Oberfläche des Lichtleiters ausgebildet. Es kann aber auch vorgesehen sein, dass auf der Oberfläche des Lichtleiters eine weitere Materialschicht vorgesehen ist, auf welcher ihrerseits die Kondensationsoberfläche ausgebildet ist. Der Lichtleiter besteht bevorzugt durchgängig aus demselben Material.

Grundsätzlich kann die Kondensationsoberfläche mit vergleichsweise hoher Oberflächenrauigkeit ausgebildet sein. Hierzu kann die Kondensationsoberfläche, wie auch in der DE 35 43 155 C2 beschrieben, gezielt aufgeraut sein. Bei einer aufgerauten Kondesationsoberfläche können jedoch Schmutzteilchen unter Umständen ebenso eine Glättung der Kondensationsoberfläche hervorrufen wie das Kondensat, und somit eine Benetzung vortäuschen. Eine besonders verschmutzungsunempfindliche Vorrichtung kann somit dadurch erhalten werden, dass die Kondensationsoberfläche glatt ist. Besonders bevorzugt ist es dabei, dass die mittlere Rauhigkeit (Ra) der Kondensationsoberfläche geringer als 100 nm, insbesondere geringer als 10 nm oder 2 nm ist. Vorteilhafterweise beträgt die Rauigkeit etwa 0,5 bis 0,7 nm. Geeigneterweise ist die mittlere Rauigkeit über der gesamten Kondensationsoberfläche zumindest annähernd gleich, wodurch eine besonders homogene Verteilung der Tröpfchen erhalten werden kann.

Um den Wärmestrom im Lichtleiter zwischen dem Bereich der Kondensationsoberfläche und dem verbleibenden Lichtleiter und somit den Energiebedarf der Mittel zum Einstellen der Temperatur der Kondensationsoberfläche gering zu halten, ist es vorteilhaft, dass die spezifische Wärmeleitfähigkeit des Lichtleiters zumindest in der Umgebung der Kondensationsoberfläche vergleichsweise klein ist, d.h. dass der Lichtleiter ein vergleichsweise schlechter Wärmeleiter ist. Insbesondere kann hierdurch eine Wärmeableitung zu Anschlüssen und/oder einem Gehäuse der Vorrichtung gering gehalten werden. Darüber hinaus können sich bei einer geringen spezifischen Wärmeleitfähigkeit des Lichtleiters in der Umgebung der temperaturgesteuerten Kondensationsoberfläche große Temperaturgradienten einstellen, wodurch gewährleistet werden kann, dass sich eine Betauung lediglich im Bereich der Kondensationsoberfläche, nicht hingegen im umgebenden Oberflächenbereichen einstellt. Durch die Wahl einer geringen spezifischen Wärmeleitfähigkeit des Lichtleiters kann auch eine thermische Fremdeinkopplung weitestgehend verhindert werden.

Im Bereich der Kondensationsoberfläche ist hingegen eine gute Wärmeleitfähigkeit von Vorteil, um die Wärmeenergie der Mittel zum Einstellen der Temperatur der Kondensationsoberfläche mit möglichst niedrigem Temperaturgradienten an die Kondensationsoberfläche zu bringen. Der umgebende Bereich ist dagegen bevorzugt schlecht Wärme leitend, um den Kondensationsbereich thermisch vom Gehäuse zu entkoppeln. Um eine gute Wärmekopplung zu den Mitteln zum Einstellen der Temperatur und gleichzeitig eine schlechte Wärmekopplung zum Gehäuse zu erhalten, ist es insbesondere bei einer einstückigen Ausführung des Lichtleiters von Vorteil, dass dieser im Kondensationsbereich möglichst dünn, insbesondere verglichen mit der Umgebung des Kondensationsbereichs, ausgestaltet ist.

Um eine geringe spezifische Wärmeleitfähigkeit zu erzielen, kann der Lichleiter insbesondere aus Glas bestehen. Besonders bevorzugt ist es, dass die spezifische Wärmeleitfähigkeit des Lichtleiters, zumindest in der Umgebung der Kondensationsoberfläche, geringer als 10 W/(K x m), insbesondere geringer als 1 W/(K x m) ist. Um auch bei geringen spezifischen Wärmeleitfähigkeiten des Lichtleiters eine gute Temperaturkontrolle der Kondensationsoberfläche zu erreichen, ist geeigneterweise eine gute thermische Ankopplung der Mittel zum Einstellen der Temperatur der Kondensationsoberfläche an den Lichtleiter gegeben. Hierzu sind diese Mittel, die beispielsweise als Peltier-Element ausgeführt sind, vorteilhafterweise über eine Wärmeleitpastenschicht mit dem Lichtleiter verbunden.

Zum Erzeugen der semihydrophoben Oberflächeneigenschaften im Bereich der Kondensationsoberfläche kann der Lichtleiter beispielsweise chemisch funktionalisiert sein. Durch geeignete chemische Funktionalisierung kann die Kondensationsoberfläche dabei speziell zur Detektion bestimmter Substanzen sensibilisiert werden. Besonders bevorzugt ist es jedoch, dass die Kondensationsoberfläche eine fertig polierte Substratoberfläche ist. Hierunter wird verstanden, dass die Oberfläche des Lichtleiters, d.h. des Substrates, zumindest im Bereich der Kondensationsoberfläche nach dem Polieren und gegebenenfalls anschließenden Reinigen keinen weiteren oberflächenmodifizierenden Prozessen mehr unterzogen wurde und/oder unterzogen werden muss.

Der Lichtwellenleiter kann, zumindest im Bereich der Kondensationsoberfläche, auch beispielsweise SiC, SiON_{X} und/oder NiCr aufweisen, insbesondere mit diesen Materialien beschichtet sein.

Grundsätzlich ist es möglich, die Lichtquelle und/oder den Lichtsensor vom Lichtleiter beabstandet anzuordnen. Daneben können auch weitere Koppellichtleiter vorgesehen sein, die zwischen Lichtquelle und Lichtleiter und/oder zwischen Lichtsensor und Lichtleiter angeordnet sind. Um den Einfluss von Verschmutzungen gering zu halten, ist es dabei bevorzugt, dass der Lichtweg von der Lichtquelle zum Lichtsensor im Wesentlichen durch ein Medium verläuft, welches vom Messgas verschieden ist.

Ein weiterer, unabhängiger Aspekt der Erfindung kann jedoch darin gesehen werden, dass die Lichtquelle und/oder der Lichtsensor am Lichtleiter, insbesondere auf einer der Kondensationsoberfläche abgewandten Rückseite, angeordnet sind. Die Lichtquelle und/oder der Lichtsensor können hierzu beispielsweise auf dem Lichtleiter aufgeklebt und/oder aufgeschmolzen sein. Zur Justierung des Strahlengangs kann auch vorgesehen sein, dass die Lichtquelle und/oder der Lichtsensor am Lichtleiter verschiebbar angeordnet sind. Vorteilhafterweise ist zwischen Lichtquelle und Lichtleiter und zwischen Lichtsensor und Lichtleiter je eine Blende vorgesehen. Sofern derartige Blenden vorgesehen sind, können diese beispielsweise auf den Lichtleiter aufgedampft, aufgesputtert, aufgedruckt, abgeschieden, beschichtet oder aufgeklebt sein, wobei die Lichtquelle und/oder der Lichtsensor dann wiederum auf den Blenden aufgeklebt sein können. Die Blenden sind geeigneterweise auf der Oberfläche des Lichtleiters angeordnet.

Grundsätzlich ist es möglich, das Licht über weitere Koppellichtleiter in den Lichtleiter mit der Kondensationsoberfläche einzukoppeln oder auszukoppeln. Diese Koppellichtleiter können insbesondere winkelig zur Kondensationsoberfläche angeordnet sein. Indem die Lichtquelle und/oder der Lichtsensor unter Zwischenschaltung von Blenden unmittelbar auf dem Lichtleiter angeordnet werden, ist es jedoch möglich, die Vorrichtung besonders preiswert und in kleiner Bauform herzustellen.

Durch das Einbringen einer Blende zwischen die Lichtquelle und den Lichtleiter kann insbesondere ein Segment der räumlichen Intensitätsverteilung der Lichtquelle zur Beleuchtung der Kondensationsoberfläche ausgenutzt werden. Die Lichtquelle ist dabei bevorzugt zumindest annähernd als Lambert-Strahler ausgebildet. Nicht unter dem gewünschten Einfallswinkel α zur Kondensationsoberfläche in den Lichtleiter eintretendes Licht kann durch die Blende besonders einfach und wirksam ausgeblendet werden. Die Blende ist vorteilhafterweise reflektierend, d.h. als Verspiegelung ausgeführt. Durch die Anordnung der Lichtquelle auf der Rückseite des Lichtleiters und der Zwischenschaltung einer Blende, ohne dass weitere Koppellichtleiter vorgesehen sind, kann die erfindungsgemäße Vorrichtung optisch besonders einfach gestaltet werden.

Im Auskoppelbereich kann die Blende verhindern, dass Störlicht in den Lichtsensor eindringt, wo dieses zu einem Übersteuern des Lichtsensors führen könnte. Das vom Einfallswinkel abweichende Licht, d.h. das Licht, das unter einem unterschiedlichen Winkel verläuft, wird an den Blenden reflektiert.

Besonders bevorzugt ist es erfindungsgemäß ferner, dass die Lichtquelle eine Leuchtdiode (LED) und/oder der Lichtsensor eine Photodiode aufweist. Durch Verwendung derartiger Leuchtdioden und/oder Photodioden können besondes kompakte Vorrichtungen zum Bestimmen der Taupunkttemperatur besonders wirtschaftlich gefertigt werden.

Eine besonders kompakte Vorrichtung zum Bestimmen der Taupunkttemperatur kann erfindungsgemäß weiterhin dadurch erhalten werden, dass die Mittel zum Einstellen der Temperatur an der der Kondensationsoberfläche abgewandten Rückseite des Lichtleiters angeordnet sind, und/oder dass der Lichtleiter im Bereich der Kondensationsoberfläche und der Mittel zum Einstellen der Temperatur eine Verjüngung aufweist. Die Mittel zum Einstellen der Temperatur sind vorteilhafterweise als Peltier-Element ausgeführt. Durch die Anordnung der Mittel zum Einstellen der Temperatur an der der Kondensationsoberfläche gegenüberliegenden Rückseite des Lichtleiters kann eine gute thermische Kopplung zwischen den Mitteln und der Kondensationsoberfläche bei gleichzeitig kompakter Bauweise erreicht werden. Die thermische Kopplung kann durch Ausbilden der Verjüngung im Lichtleiter weiter verbessert werden. Unter einer Verjüngung wird dabei ein Bereich des Lichtleiters verstanden, in dem dieser mit geringerer Dicke ausgebildet ist. Insbesondere können die Mittel zum Einstellen der Temperatur an der Verjüngung angeordnet sein. Vorteilhafterweise beträgt die Dicke des Lichtleiters an der Verjüngung, d.h. zwischen der Kondensationsoberfläche und den Mitteln zum Einstellen der Temperatur, etwa 1 mm oder weniger.

Zur Erhöhung des Signal-Rausch-Verhältnisses kann erfindungsgemäß vorgesehen sein, dass der Lichtleiter und die Lichtquelle zur mehrfachen internen Lichtreflexion im Lichtleiter, insbesondere im Bereich der Kondensationsoberfläche und/oder der Verjüngung, ausgebildet sind. Um eine große Zahl interner Reflexionen zu erhalten, ist die Dicke des Lichtleiters im Bereich der Verjüngung vorteilhafterweise möglichst gering. Zur Verbesserung des Reflexionsvermögens kann vorgesehen sein, dass der Lichtleiter in Oberflächenbereichen, die von der Kondensationsoberfläche beabstandet sind, insbesondere an der der Kondensationsoberfläche abgewandten Rückseite, beschichtet, insbesondere verspiegelt ist.

Eine besonders zuverlässige Vorrichtung zur Bestimmung der Taupunkttemperatur kann erfindungsgemäß dadurch gegeben sein, dass mit der Lichtquelle ein Lichtbündel im Wellenleiter erzeugbar ist, dessen Einfallswinkel auf die Kondensationsoberfläche zwischen dem Grenzwinkel des Übergangs Lichtleiter/Messgas und dem Grenzwinkel des Übergangs Lichtleiter/kondensierende Phase liegt. Unter dem Grenzwinkel wird dabei der gegen die Oberflächennormale gemessene Grenzwinkel der Totalreflexion verstanden, d.h. der maximale Einfallswinkel, oberhalb dem ein Lichtübergang in das optisch dünnere Medium nicht mehr möglich ist und das Licht nahezu vollständig reflektiert wird. Unter dem Übergang Lichtleiter/Messgas ist der Übergang zwischen dem optisch dichteren Lichtleiter und dem optisch dünneren Messgas zu verstehen. Der Übergang Lichtleiter/kondensierende Phase ist analog zu verstehen.

Durch den erfindungsgemäß vorgesehenen Einfallswinkel zwischen den beiden genannten Grenzwinkeln wird das Licht bei unbetauter Kondensationsoberfläche von dieser total reflektiert. Beim Vorliegen von Wassertröpfchen an der Kondensationsoberfläche hingegen wird das Licht zumindest teilweise aus dem Lichtleiter in die Wassertröpfchen und von dort in das umgebende Messgas ausgekoppelt. Hieraus resultiert eine Abschwächung der Lichtintensität im Lichtsensor bei Betauung der Kondensationsoberfläche, die als Maß für das Erreichen der Taupunkttemperatur an der Kondesationsoberfläche dienen kann. Bei dem Messgas kann es sich insbesondere um Luft und bei der kondensierenden Phase insbesondere um Wasser handeln. In diesem Fall kann der Grenzwinkel des Übergangs Lichtleiter/Messgas beispielsweise etwa 40 und der Grenzwinkel des Übergangs Lichtleiter/kondensieren-de Phase beispielsweise etwa 60° betragen. Diese Grenzwinkel können insbesondere dann gegeben sein, wenn der Lichtleiter aus Glas besteht. Bei Lichteinstrahlung mit dem genannten Einfallswinkel zwischen den beiden Grenzwinkeln liegt dieser Einfallswinkel also bei trockener Kondensationsoberfläche oberhalb des aktuellen Grenzwinkels für Totalreflexion und bei betauter Kondensationsoberfläche unterhalb des aktuellen Grenzwinkels für Totalreflexion. Eine Totalreflexion tritt somit nur bei trockener Kondensationsoberfläche auf.

Neben Wasser ist die erfindungsgemäße Vorrichtung jedoch auch zur Detektion anderer Stoffe, insbesondere mit entsprechenden Grenzwinkeln, geeignet, wobei dann diese anderen Stoffe die kondensierende Phase bilden. Durch geeignete Hydrophobisierung, d.h. durch geeignete Wahl der Oberflächenenergien der Kondensationsoberfläche, bilden die zu detektierenden Stoffe Tropfen, die unter nahezu allen Brechungsindizes die Strahlung auskoppeln.

Zur Bestimmung der Temperatur der Kondensationsoberfläche kann nach der Erfindung vorgesehen sein, dass auf dem Lichtleiter, insbesondere im Bereich der Kondensationsoberfläche, ein temperaturabhängiger Leiter aufgebracht, insbesondere aufgesputtert ist. Der temperaturabhängige Leiter kann beispielsweise Aluminium, Platin und/oder Nickel aufweisen. Geeigneterweise ist der temperaturabhängige Leiter auf der Oberfläche des Lichtleiters um die Kondensationsoberfläche herum angeordnet. Der temperaturabhängige Leiter kann insbesondere als Metallschicht ausgebildet sein.

Sofern ein Halbleitermaterial, beispielsweise Silizium, als Lichtleiter verwendet wird, kann die erfindungsgemäße Vorrichtung als Teil einer integrierten Schaltung ausgebildet sein und beispielsweise zumindest einen pn-Übergang auf dem Lichtleiter aufweisen. Insbesondere können auch die Sende-LED und/oder der Detektor, d.h. der Lichtsensor, integriert sein, wodurch die Herstellungskosten weiter gesenkt werden könen.

Die Kondensationsoberfläche ist geeigneterweise rechteckig, insbesondere quadratisch ausgebildet. Sie kann aber auch rund ausgebildet sein. Die Kondensationsoberfläche entspricht bevorzugt ihrem Umfang nach der Form der Mittel zum Einstellen der Temperatur. Insbesondere ist die Kondensationsoberfläche für eine homogene Temperaturverteilung ausgelegt. Die Außenabmessungen der Kondensationsoberfläche betragen vorteilhafterweise weniger als 5 mm. Insbesondere können die Außenabmessungen der Kondensationsoberfläche 2 x 2 mm betragen. Der temperaturabhängige Leiter, der auch als Temperaturfühler bezeichnet werden kann, weist vorteilhafterweise eine Schichthöhe von 100 bis 200 nm und eine Schichtbreite von weniger als 100 µm auf.

Zur elektrischen Isolation des temperaturabhängigen Leiters, insbesondere gegenüber dem Messgas und/oder der kondensierenden Phase, ist auf diesem Leiter geeigneterweise eine isolierende Passivierungsschicht vorgesehen. Diese Passivierungsschicht kann beispielsweise SiO₂ und/oder SiC aufweisen und eine Schichtdicke von etwa 1 µm besitzen. Durch Verwendung von SiC, d.h. Siliziumcarbonat, lassen sich besonders dichte und/oder porenfreie Passivierungsschichten erhalten. Die Passivierungsschicht kann sich auch auf die Kondensationsoberfläche erstrecken.

Bei dem Licht kann es sich erfindungsgemäß um NIR-, IR-, VIS- und/oder UV-Licht handeln. Bevorzugt ist die Verwendung von NIR-Licht.

Geeigneterweise weist die erfindungsgemäße Vorrichtung eine Steuer- und Auswerteeinrichtung auf, die mit der Lichtquelle, dem Lichtsensor, dem temperaturabhängigen Leiter und den Mitteln zum Einstellen der Temperatur der Kondensationsoberfläche in Signalverbindung, insbesondere in Leitungsverbindung steht. Durch diese Steuer- und Auswerteeinrichtung kann die Temperatur der Kondensationsoberfläche mittels den Mitteln zum Einstellen der Temperatur gesteuert werden. Dabei kann durch die Steuer- und Auswerteeinrichtung eine Änderung der Lichtintensität am Lichtsensor ausgewertet werden. Bei gleich bleibender Lichtleistung der Lichtquelle deutet eine solche Änderung der Lichtintensität auf eine Änderung des Betauungszustandes der Kondensatiorisoberfläche und somit auf das Erreichen der Taupunkttemperatur hin. Die aktuelle Temperatur der Kondensationsoberfläche kann dabei mittels des temperaturabhängigen Leiters erfasst werden.

Zur Kompensation von Intensitätsschwankungen der Lichtquelle, die insbesondere auf Alterungsserscheinungen der Lichtquelle beruhen können, ist es erfindungsgemäß vorteilhaft, dass zusätzlich zum Lichtsensor ein Referenzlichtsensor zum Bestimmen der Lichtintensität der Lichtquelle vorgesehen ist. Vorteilhafterweise wird das Licht von der Lichtquelle zum Referenzlichtsensor durch den Lichtleiter geführt. Insbesondere kann der Referenzlichtsensor am Lichtleiter angeordnet sein. Um ein zuverlässiges Referenzsignal am Referenzlichtsensor zu erhalten, ist es vorteilhaft, dass das Licht von der Lichtquelle zum Referenzlichtsensor von der Kondensationsoberfläche beabstandet geführt wird.

Eine besonders kompakte Anordnung des Referenzlichtsensors bezüglich der Lichtquelle und somit eine besonders kompakte Vorrichtung kann dadurch erhalten werden, dass am Lichtleiter ein verspiegelter Bereich zur Reflexion von Licht der Lichtquelle zum Referenzlichtsensor vorgesehen ist. Vorteilhafterweise sind die Lichtquelle und/oder der Referenzlichtsensor auf der der Kondensationsoberfläche abgewandten Rückseite des Lichtleiters angeordnet, wohingegen der verspiegelte Bereich auf der Vorderseite des Lichtleiters angeordnet ist, auf welcher sich auch der Kondensationsbereich befindet.

Die Erfindung kann daneben beinhalten, dass am Lichtleiter ein Lichtauskoppelbereich vorgesehen ist, über den von der Lichtquelle ausgehendes Licht, insbesondere zur Datenübertragung, aus dem Lichtleiter auskoppelbar ist. Dabei ist die Lichtquelle geeigneterweise zur Erzeugung von Sendesignalen vorgesehen, die über den Lichtauskoppelbereich in ein optisches System auskoppelbar sind. Die Sendesignale können beispielsweise Informationen über die Taupunkttemperatur und/oder über den Zustand der Vorrichtung enthalten. Der Lichtauskoppelbereich kann insbesondere als Streugitter oder als Aufrauung an der Oberfläche des Lichtleiters ausgebildet sein. Ein solches Streugitter kann dabei im Querschnitt dreieckartige Erhebungen und/oder Vertiefungen aufweisen. Um eine besonders zuverlässige Lichtauskopplung am Lichtauskoppelbereich zu erzielen, ist es vorteilhaft, dass dieser Lichtauskoppelbereich von der Kondensationsoberfläche thermisch entkoppelt ist. Insbesondere kann der Lichtauskoppelbereich auf der Vorderseite des Lichtleiters vorgesehen sein. Neben einem Lichtauskoppelbereich kann am Lichtleiter auch ein Einkoppelbereich, insbesondere ein Einkoppelgitter, vorgesehen sein, über welchen optische Sendesignale zur Informationsübertragung in den Lichtleiter einkoppelbar sind. Vorteilhafterweise handelt es sich bei den Sendesignalen um IR-Sendesignale.

Die Erfindung wird nachfolgend anhand bevorzugter Ausführungsbeispiele näher erläutert, die in den Figuren dargestellt sind. In den Figuren zeigen schematisch:
- Fig. 1: eine Querschnittsansicht einer erfindungsgemäßen Vorrichtung zur Bestimmung der Taupunkttemperatur gemäß einer ersten Ausführungsform;
- Fig. 2: eine Querschnittsansicht einer erfindungsgemäßen Vorrichtung gemäß einer zweiten Ausführungsform;
- Fig. 3: eine Draufsicht einer erfindungsgemäßen Vorrichtung gemäß einer weiteren Ausführungsform;
- Fig. 4: eine Detailquerschnittsansicht des Lichtauskoppelbereichs aus Fig. 3;
- Fig. 5: den Strahlengang an einer Kondensationsoberfläche;
- Fig. 6: den Strahlengang an einer betauten Kodensationsoberfläche mit hydrophilen Eigenschaften;
- Fig. 7: den Strahlengang an einer betauten Kodensationsoberfläche mit semihydrophoben Eigenschaften; und
- Fig. 8: eine Querschnittsansicht eines Kondensattröpfchens auf einer hydrophoben Kondensationsoberfläche.

Gleich wirkende Elemente werden in den Figuren durchgehend mit denselben Bezugzeichen bezeichnet.

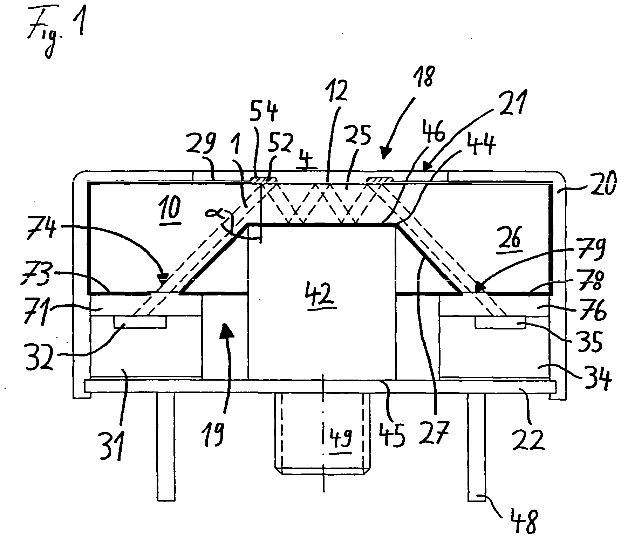

Ein erstes Ausführungsbeispiel einer erfindungsgemäßen Vorrichtung ist in Fig. 1 dargestellt. Die Vorrichtung weist einen als Glassubstrat ausgebildeten Lichtleiter 10 auf, der auch als transparenter Körper bezeichnet werden kann. Auf der Rückseite 19 des Lichtleiters 10 ist eine als Leuchtdiode (LED) ausgebildete Lichtquelle 31 angeordnet.

Diese Lichtquelle 31 weist einen Sendechip 32 zum Aussenden von Licht im Nahinfrarotbereich (NIR) auf. In diesem Spektralbereich ist auch der Lichtleiter 10, der insbesondere aus einem Glas oder einem Kunststoff bestehen kann, transparent. Zwischen der als Leuchtdiode ausgebildeten Lichtquelle 31 und dem Lichtleiter 10 sind eine haftvermittelnde, transparente Immersionsschicht 71 sowie eine Licht reflektierende Reflexionsschicht 73 vorgesehen. Die Reflexionsschicht 73 ist dabei auf den Lichtleiter 10 aufgedampft. Sie weist eine Ausnehmung 74 auf, durch welche eine Blende gebildet wird, durch die Lichtstrahlung der Lichtquelle 31 in Form eines Lichtbündels 1 in den Lichtleiter 10 tritt. Die Ausnehmung 74 kann dabei beispielsweise länglich, rund, oval, rechteckig oder quadratisch sein.

In einem mittleren Bereich auf seiner Vorderseite 18 weist der Lichtleiter 10 eine Kondensationsoberfläche 12 auf, deren Betauung mit der erfindungsgemäßen Vorrichtung nachweisbar ist. Auf der Rückseite 19 des Lichtleiters 10 sind als Peltier-Element ausgebildete Mittel 42 zum Einstellen der Temperatur der Kondensationsoberfläche 12 angeordnet. Für eine besonders gute thermische Ankopplung der Kondensationsoberfläche 12 an die Mittel 42 zum Einstellen der Temperatur sind diese Mittel 42 über eine Wärme leitende Schicht 44, die beispielsweise Wärmeleitpaste aufweisen kann, am Lichtleiter 10 angeordnet. Die Mittel 42 zum Einstellen der Temperatur können auch als Heiz- und Kühlelement bezeichnet werden.

Zur weiteren Verbesserung der Wärmekopplung der Kondensationsoberfläche 12 an die Mittel 42 zum Einstellen der Temperatur ist der Lichtleiter 10 im Bereich zwischen der Kondensationsoberfläche 12 und den Mitteln 42 zum Einstellen der Temperatur mit einer Verjüngung 25 ausgebildet, in deren Bereich die Stärke des Lichtleiters 10 auf etwa 1 mm verringert ist. Zur Bildung der Verjüngung 25 sind zwischen dieser und den äußeren Bereichen 26 des Lichtleiters 10 auf der Rückseite 19 des Lichtleiters 10 gegenüber der Vorderseite 18 des Lichtleiters 10 schräg verlaufende Begrenzungsflächen 27 vorgesehen. Die Vorderseite 18 des Lichtleiters 10 hingegen ist in den gezeigten Beispiel durchgängig eben ausgebildet. Sie kann aber z.B. auch gewölbt sein.

Versuche haben gezeigt, dass die Homogenität der Betauung der Kondensationsoberfläche 12 vom Wärmeübergangswiderstand zwischen den Mitteln 42 zum Einstellen der Temperatur und dem Lichtleiter 10 abhängt, und dass insbesondere die Homogenität durch eine gute und gleichmäßige Wärmekopplung zwischen diesen beiden Elementen verbessert werden kann.

Zur Bestimmung der Temperatur der Kondensationsoberfläche 12 ist im Bereich dieser Kondensationsoberfläche 12 direkt auf dem Lichtleiter 10 ein als temperaturabhängige Schicht ausgebildeter, temperaturabhängiger Leiter 52 aufgebracht. Mittels dieses temperaturabhängigen Leiters 52, der die Kondensationsoberfläche 12 in Draufsicht nahezu vollständig umfängt, kann die Temperatur der Kondensationsoberfläche 12 mit geringem Wärmeleitungskoeffizienten erfasst werden. Insbesondere wenn der Lichtleiter 10 aus einem Material mit geringer Wärmeleitfähigkeit und geringer Wärmekapazität besteht, ist es vorteilhaft, dass der verwendete temperaturabhängige Leiter 52 der Kondensationsoberfläche 12 möglichst wenig Wärmeenergie entzieht.

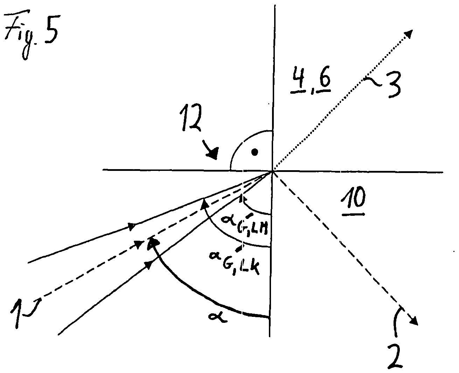

Die Ausnehmung 74 in der Reflexionsschicht 73 ist so positioniert, dass das aus der Lichtquelle 31 in den Lichtleiter 10 austretende Lichtbündel 1 in diesem Lichtleiter 10 unter einem Einfallswinkel α auf die Kondensationsoberfläche 12 trifft, der zwischen dem Grenzwinkel α_{G, LM} des Übergangs Lichtleiter/Messgas und dem Grenzwinkel α_{G, LK} des Übergangs Lichtleiter/kondensierende Phase liegt. Dieser Zusammenhang ist in Fig. 5 näher erläutert.

Aufgrund des wie beschrieben gewählten Einfallswinkels α wird das Lichtbündel 1 bei trockener Kondensationsoberfläche 12 an dieser Kondensationsoberfläche 12 total reflektiert. Von hier fällt das reflektierte Lichtbündel 1 auf die Rückseite 19 des Lichtleiters 10, die zur Verbesserung der Lichtreflexion zumindest im Bereich der Mittel 42 zum Einstellen der Temperatur mit einer Reflexionsschicht 46 versehen ist. Das Lichtbündel 1 wird somit auch an der Rückseite 19 des Lichtleiters 10 reflektiert und fällt von dort wieder unter dem Einfallswinkel α auf die Kondensationsoberfläche 12, wo es erneut reflektiert wird. Im Bereich der Verjüngung 25 bildet sich somit eine mehrfache Reflexion des Lichtbündels 1 aus, wobei die Zahl der Reflexionen mit sinkender Materialstärke der Verjüngung 25 zunimmt. Durch Erhöhung der Zahl der Reflexionen kann der Messeffekt der erfindungsgemäßen Vorrichtung erhöht werden.

Nach einer abschließenden Reflexion an der Kondensationsoberfläche 12 gelangt das Lichtbündel 1 durch eine weitere eine Blende bildende Ausnehmung 79 in einer weiteren Reflexionsschicht 78 und durch eine weitere Immersionsschicht 76 auf eine sensitive Schicht 35 eines Lichtsensors 34, der ebenfalls an der Rückseite 19 des Lichtleiters 10 angeordnet ist.

Kommt es aufgrund eines Absinkens der Temperatur der Kondensationsoberfläche 12 zu deren Betauung, so wird das Lichtbündel 1, wie in den Fig. 5 bis 7 näher erläutert, nicht mehr vollständig an der Kondensationsoberfläche 12 reflektiert, sondern zumindest teilweise in das umgebende Messgas 4 ausgekoppelt. Aufgrund dieser unvollständigen Reflexion sinkt die Lichtintensität am Lichtsensor 34. Ein Absinken der Lichtintensität am Lichtsensor 34 kann somit als Hinweis auf die Betauung der Kondensationsoberfläche 12 dienen. Erfindungsgemäß liegt die Kondensationsoberfläche 12 am Lichtleiter 10 der Lichtquelle 31 und dem Lichtsensor 34 gegenüber.

Die ebenfalls mit der Reflexionsschicht 46 versehenen Begrenzungsflächen 27 verlaufen etwa parallel zum Lichtbündel 1, d.h. unter dem Einfallswinkel α zur Normalen der Vorderseite 18. Hierdurch kann gewährleistet werden, dass Streulicht, welches unter einem unerwünschten, insbesondere vom Einfallswinkel α verschiedenen Winkel einfällt, durch diese Begrenzungsflächen 27 reflektiert wird und nicht zum Lichtsensor 34 gelangt.

Zur elektrischen Isolation des temperaturabhängigen Leiters 52 gegenüber dem Messgas 4 ist auf diesem Leiter 52 eine Passivierungsschicht 54 aus SiC oder SiO₂ aufgebracht.

Die in Fig. 1 dargestellte Vorrichtung weist ein Gehäuse 20 auf, in dem der Lichtleiter 10, die Lichtquelle 31, der Lichtsensor 34 und die Mittel 42 zum Einstellen der Temperatur der Kondensationsoberfläche 12 aufgenommen sind. Das Gehäuse 20 ist im Bereich der Kondensationsoberfläche 12 mit einer Öffnung 21 versehen, um die Wechselwirkung des Messgases 4 mit der Kondensationsoberfläche 12 zu gewährleisten. Die Öffnung 21 ist dabei so groß gewählt, dass der thermische Kontakt, den das Gehäuse 20 in der Regel mit der Kondensationsoberfläche 12 herstellt, möglichst gering ist. Durch die Wahl eines großen Abstandes zwischen Kondensationsoberfläche 12 und Gehäuse 20 kann die Temperaturverteilung im Bereich der Kondensationsoberfläche 12 weitestgehend homogen gehalten werden. Die Homogenität der Temperaturverteilung kann weiter dadurch verbessert werden, dass die Wärmeleitfähigkeit des Lichtleiters 10 gering gewählt wird.

Im Bereich zwischen dem Gehäuse 20 und der KondensationsOberfläche 12 ist auch die Vorderseite 18 des Lichtleiters 10 mit einer Reflexionsschicht 29 versehen, um Streulichteinflüsse zu verringern. Die Reflexionsschichten 46, 73, 78 und/oder 29 hängen geeigneterweise zusammen.

Auf seiner Rückseite weist das Gehäuse 20 einen Boden 22 auf. An diesem Boden 22 sind die Mittel 42 zum Einstellen der Temperatur der Kondensationsoberfläche 12 über eine weitere Wärme leitende Schicht 45, vorzugsweise aus Wärmeleitpaste, angekoppelt. Am Boden 22 und/oder an den Mitteln 42 zum Einstellen der Temperatur ist ein Gewindestift 49 zur Befestigung eines in Fig. 1 nicht dargestellten Wärmeableitadapters vorgesehen.

Zur Kontaktierung der Lichtquelle 31, des Lichtsensors 34, der Mittel 42 zum Einstellen der Temperatur sowie des temperaturabhängigen Leiters 52 sind am Boden 22 des Gehäuses 20 elektrische Kontaktstifte 48 vorgesehen.

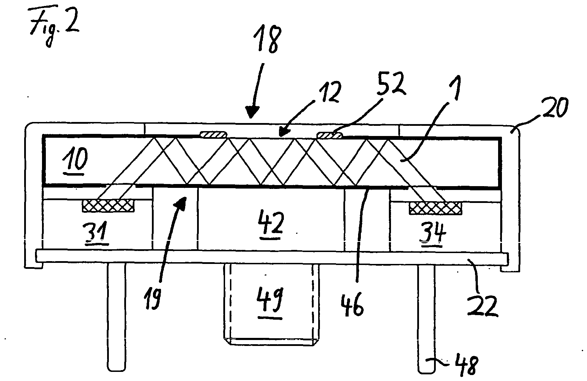

Eine weitere Ausführungsform einer erfindungsgemäßen Vorrichtung ist in Fig. 2 dargestellt. Diese Ausführungsform unterscheidet sich von der in Fig. 1 dargestellten Ausführungsform im Wesentlichen dadurch, dass im Bereich der Kondensationsoberfläche 12 keine Verjüngung 25 vorgesehen ist. Vielmehr ist die Materialstärke des Lichtleiters 10 über den gesamten Lichtleiter 10 im Wesentlichen konstant. Insbesondere sind bei der in Fig. 2 dargestellten Vorrichtung somit keine schrägen Begrenzungsflächen 27 vorhanden.

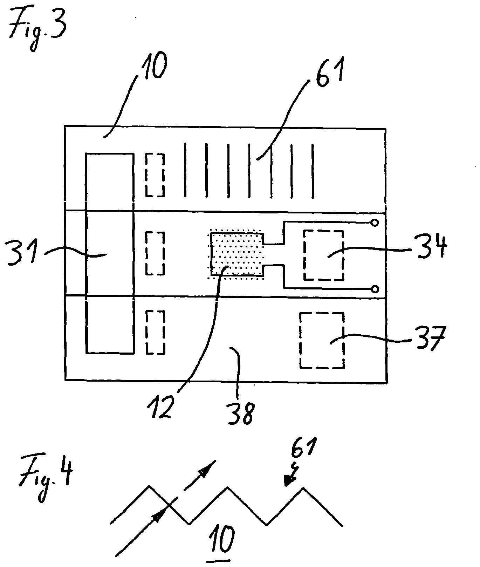

In Fig. 3 und 4 ist eine weitere Ausführungsform einer erfindungsgemäßen Vorrichtung 4 dargestellt. Diese Vorrichtung weist im Lichtleiter 10 eine Referenzstrecke auf, mit der eine Alterung und eine damit verbundene Intensitätsabname der Lichtquelle 31 nachgewiesen werden kann. Hierzu ist am Lichtleiter 10 ein verspiegelter Bereich 38 vorgesehen, durch den ein Teil der Intensität der Lichtquelle 31 in einen Referenzlichtsensor 37 eingekoppelt wird. Das Signal des Referenzlichtsensor 37 kann bei der Auswertung des Signals des Lichtsensors 34 zur Kompensation der Intensitätsabnahme der Lichtquelle 31 berücksichtigt werden.

Darüber hinaus weist die Ausführungsform der Fig. 3 einen Lichtauskoppelbereich 61 zur gezielten und betauungsunabhängigen Auskopplung eines Teils der Lichtintensität der Lichtquelle 31 auf. Über diesen Lichtauskoppelbereich 61 können Informationen über den Zustand der Vorrichtung, die der Intensität der Lichtquelle 31 aufmoduliert sind, aus der Vorrichtung ausgekoppelt werden. Der Lichtauskoppelbereich 61 wird, wie in Fig. 4 dargestellt, durch ein Gitter mit dreieckartigen und/oder pyramidenartigen Erhebungen und Vertiefungen auf der Oberfläche des Lichtleiters 10 gebildet. Er kann aber auch durch eine Aufrauung gebildet sein.

Fig. 5 zeigt den Verlauf eines als Lichtstrahl dargestellten Lichtbündels 1 an einer erfindungsgemäßen Kondensationsoberfläche 12 bei trockenem und betautem Zustand der Kondensationsoberfläche 12. Erfindungsgemäß fällt das Lichtbündel 1 unter einem Einfallswinkel α auf die Kondensationsoberfläche 12, der zwischen dem Grenzwinkel für Totalreflexion α_{G, LM} des Übergangs Lichtleiter/Messgas und dem Grenzwinkel für Totalreflexion α_{G, LK} des Übergangs Lichtleiter/kondensierende Phase liegt.

Ist die Kondensationsoberfläche 12 also trocken, d.h. grenzt dort an den Lichtleiter 10 das Messgas 4 an, so ist der Einfallswinkel α des Lichtbündels 1 größer als der aktuelle Grenzwinkel α_{G, LM} . Das Lichtbündel 1 wird somit, wie durch das Lichtbündel 2 angedeutet, an der Kondensationsoberfläche total reflektiert.

Ist hingegen die Kondensationsoberfläche 12 betaut, d.h. grenzt dort an den Lichtleiter 10 die kondensierende Phase 6 an, so ist der Einfallswinkel α kleiner als der aktuelle Grenzwinkel α_{G, LK} · Folglich kommt es an der Kondensationsoberfläche 12 nur noch zu einer Teilreflexion und ein Teil der Lichtintensität des Lichtbündels 1 wird im Lichtbündel 3 aus dem Lichtleiter 10 in die kondensierende Phase 6 ausgekoppelt.

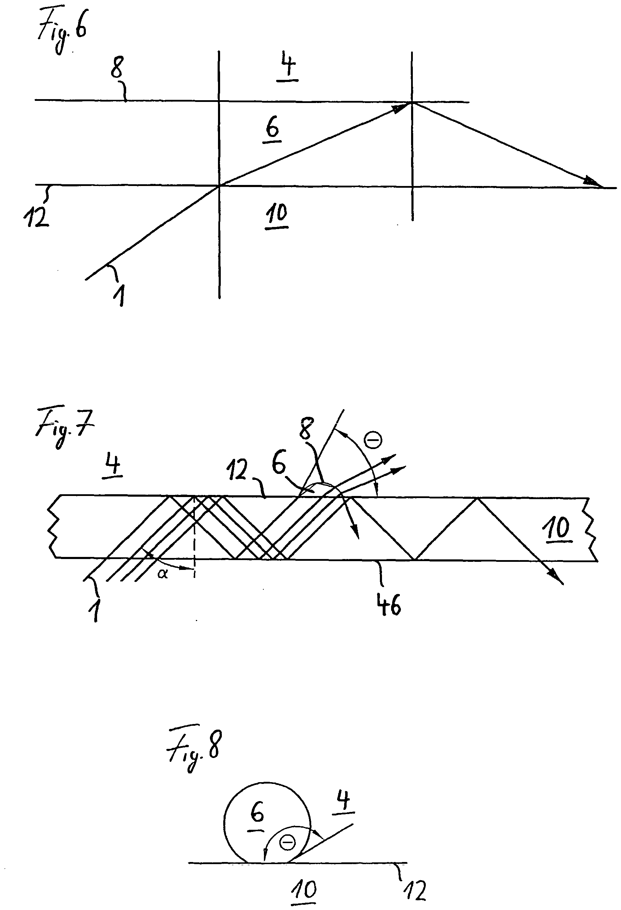

Der Strahlengang an einer betauten, hydrophilen Kondensationsoberfläche 12 ist in Fig. 6 dargestellt. Aufgrund der hydrophilen Eigenschaften der Kondensationsoberfläche 12 bildet die aus Wasser bestehende, kondensierende Phase 6 einen ausgedehnten Wasserfilm auf dem Lichtleiter 10. Dabei bildet sich am Übergang zwischen dem Wasserfilm und dem Messgas 4 eine Grenzfläche 8 heraus, die im Wesentlichen prallel zur Kondensationsoberfläche 12 verläuft. An dieser Grenzfläche 8 wird das aus dem Lichtleiter 10 ausgekoppelte Lichtbündel 1 reflektiert und wieder in den Lichtleiter 10 zurückgekoppelt. Durch diese Rückkopplung wird der Anteil des bei Betauung aus dem Lichtleiter 10 ausgekoppelten Lichtes reduziert und somit die Änderung der Lichtintensität am Lichtsensor 34 bei Betauung verringert.

Ein Lichtleiter 10 mit einer erfindungsgemäß semihydrophoben Kondensationsoberfläche 12 ist in Fig. 7 gezeigt. Aufgrund der semihydrophoben Eigenschaften der Kondensationsoberfläche 12 bildet die kondensierende Wasserphase 6 auf dieser Oberfläche keinen durchgehenden Wasserfilm, sondern schlägt sich in Form einzelner Tröpfchen mit einem Kontakt-winkel Θ im Bereich von etwa 90° nieder. Die Grenzfläche 8 zwischen der kondensierenden Wasserphase 6 und dem Messgas 4 verläuft somit, mit Ausnahme der obersten Punkte der Tröpfchen, nicht parallel zur Kondensationsoberfläche 12, so wie dies bei einer hydrophilen Oberfläche der Fall wäre. Aufgrund dieses nicht parallelen Verlaufes der Grenzfläche 8 wird ein Teil des aus dem Lichtleiter 10 in die kondensierende Phase 6 ausgekoppelten Lichtes aus dieser kondensierenden Phase 6 unmittelbar in das umgebende Messgas 4 ausgekoppelt und insbesondere nicht in den Lichtleiter 10 zurückgekoppelt. Der verbleibende Teil des in die kondensierende Phase 6 ausgekoppelten Lichtes, der wieder in den Lichtleiter 10 zurückgekoppelt wird, wird aufgrund der fehlenden Parallelität der Grenzfläche 8 zur Kondensationsoberfläche 12 mit einem geänderten Einfallswinkel zurückgekoppelt und somit vom Lichtsensor 34 zu einem großen Teil ebenfalls nicht nachgewiesen. Die aus dem Lichtleiter 10 in die kondensierende Phase 6 ausgekoppelte Lichtintensität trägt somit allenfalls unwesentlich zur Intensität am Lichtsensor 34 bei.

Fig. 8 zeigt ein Wassertröpfchen auf einer hydrophoben Kondensationsoberfläche 12. Wie Fig. 8 zu entnehmen ist, trägt aufgrund des großen Kontaktwinkels Θ lediglich ein geringer Teil der kondensierenden Wasserphase 6 zur Benetzung der Kondensationsoberfläche 12 und somit zur Lichtauskopplung bei. Infolgedessen ist bei einer hydrophoben Kondensationsoberfläche 12 die Änderung der Lichtintensität im Lichtsensor 34 bei Betauung vergleichsweise gering.

## Patentansprüche

1. Vorrichtung zum Bestimmen der Taupunkttemperatur eines Messgases, mit
- einem Lichtleiter (10),
- einer auf dem Lichtleiter (10) angeordneten Kondensationsoberfläche (12), deren Reflexionsvermögen von der Kondensation des Messgases (4) abhängt,
- einer Lichtquelle (31) zum Aussenden von Licht durch den Lichtleiter (10) auf die Kondensationsoberfläche (12),
- einem Lichtsensor (34) zum Ermitteln der von der Kondensationsoberfläche (12) in den Lichtleiter (10) zurück reflektierten Lichtintensität, und
- Mitteln (42) zum Einstellen der Temperatur der Kondensationsoberfläche (12),
- wobei mit der Lichtquelle (31) ein Lichtbündel (1) im Lichtleiter (10) erzeugbar ist, dessen Einfallswinkel (α) auf die Kondensationsoberfläche (12) zwischen dem Grenzwinkel (α_{G, LM}) des Übergangs Lichtleiter/Messgas und dem Grenzwinkel (α_{G, LK}) des Übergangs Lichtleiter/kondensierende Phase liegt, **dadurch gekennzeichnet,**
- **dass** die Kondensationsoberfläche (12) semihydrophob mit einem Kontaktwinkel (Θ) zu der kondensierenden Phase (6) des Messgases (4) zwischen 25° und 110° ausgebildet ist.

2. Vorrichtung nach Anspruch 1,
**dadurch gekennzeichnet,**
**dass** die Kondensationsoberfläche (12) durchgängig semihydrophob, bevorzugt mit etwa gleich bleibendem Kontaktwinkel (Θ) zu einer kondensierenden Phase (6) des Messgases (4), insbesondere zu Wasser, ausgebildet ist.

3. Vorrichtung nach einem der Ansprüche 1 oder 2,
**dadurch gekennzeichnet,**
**dass** der Kontaktwinkel (Θ) der semihydrophoben Kondensationsoberfläche (12) zu der kondensierenden Phase (6) des Messgases (4) größer als 30°, bevorzugt größer als 40°, 50° oder 60° ist.

4. Vorrichtung nach einem der Ansprüche 1 bis 3,
**dadurch gekennzeichnet,**
**dass** der Kontaktwinkel (Θ) der semihydrophoben Kondensationsoberfläche (12) zu der kondensierenden Phase (6) des Messgases (4) kleiner als 90° ist.

5. Vorrichtung nach einem der Ansprüche 1 bis 4,
**dadurch gekennzeichnet,**
**dass** der Lichtleiter (10), insbesondere in der Umgebung der Kondensationsoberfläche (12), Glas, ein Halbleitermaterial, beispielsweise Silizium, und/oder ein Kunststoffmaterial, beispielsweise Polykarbonat, aufweist.

6. Vorrichtung nach einem der Ansprüche 1 bis 5,
**dadurch gekennzeichnet,**
**dass** die mittlere Rauigkeit der Kondensationsoberfläche (12) geringer als 100 nm, insbesondere geringer als 10 nm oder 2 nm ist.

7. Vorrichtung nach einem der Ansprüche 1 bis 6,
**dadurch gekennzeichnet,**
**dass** die spezifische Wärmeleitfähigkeit des Lichtleiters (10), zumindest in der Umgebung der Kondensationsoberfläche (12), geringer als 10 W/(K x m), insbesondere geringer als 1 W/(K x m) ist.

8. Vorrichtung nach einem der Ansprüche 1 bis 7,
**dadurch gekennzeichnet,**
**dass** die Kondensationsoberfläche (12) eine Passivierungsschicht, insbesondere aus SiC, aufweist.

9. Vorrichtung nach einem der Ansprüche 1 bis 8,
**dadurch gekennzeichnet,**
**dass** die Lichtquelle (31) und/oder der Lichtsensor (34) am Lichtleiter (10), insbesondere auf einer der Kondensationsoberfläche (12) abgewandten Rückseite (19), angeordnet sind.

10. Vorrichtung nach einem der Ansprüche 1 bis 9,
**dadurch gekennzeichnet,**
**dass** am Lichtleiter (10), insbesondere zwischen Lichtquelle (31) und Lichtleiter (10) und/oder zwischen Lichtleiter (10) und Lichtsensor (34), zumindest eine Blende vorgesehen ist.

11. Vorrichtung nach einem der Ansprüche 1 bis 10,
**dadurch gekennzeichnet,**
**dass** die Lichtquelle (31) eine Leuchtdiode und/oder der Lichtsensor (34) eine Fotodiode aufweist.

12. Vorrichtung nach einem der Ansprüche 1 bis 11,
**dadurch gekennzeichnet,**
- **dass** die Mittel (42) zum Einstellen der Temperatur an der der Kondensationsoberfläche (12) abgewandten Rückseite (19) des Lichtleiters (10) angeordnet sind, und
- **dass** der Lichtleiter (10) im Bereich der Kondensationsoberfläche (12) und der Mittel (42) zum Einstellen der Temperatur eine Verjüngung (25) aufweist.

13. Vorrichtung nach einem der Ansprüche 1 bis 12,
**dadurch gekennzeichnet,**
**dass** der Lichtleiter (10) und die Lichtquelle (31) zur mehrfachen internen Lichtreflexion im Lichtleiter (10), insbesondere im Bereich der Kondensationsoberfläche (12) und/oder der Verjüngung (25), ausgebildet sind.

14. Vorrichtung nach einem der Ansprüche 1 bis 13,
**dadurch gekennzeichnet,**
**dass** auf dem Lichtleiter (10), insbesondere im Bereich der Kondensationsoberfläche (12), ein temperaturabhängiger Leiter (52) aufgebracht, insbesondere aufgesputtert ist.

15. Vorrichtung nach einem der Ansprüche 1 bis 14,
**dadurch gekennzeichnet,**
**dass** das Licht NIR-, IR-, VIS- und/oder UV-Licht ist.

16. Vorrichtung nach einem der Ansprüche 1 bis 15,
**dadurch gekennzeichnet,**
**dass** zusätzlich zum Lichtsensor (34) ein Referenzlichtsensor (37) zum Bestimmen der Lichtintensität der Lichtquelle (31) vorgesehen ist.

17. Vorrichtung nach Anspruch 16,
**dadurch gekennzeichnet,**
**dass** am Lichtleiter (10) ein verspiegelter Bereich (38) zur Reflexion von Licht der Lichtquelle (31) zum Referenzlichtsensor (37) vorgesehen ist.

18. Vorrichtung nach einem der Ansprüche 1 bis 17,
**dadurch gekennzeichnet,**
**dass** am Lichtleiter (10) ein Lichtauskoppelbereich (61) vorgesehen ist, über den von der Lichtquelle (31) ausgehendes Licht, insbesondere zur Datenübertragung, aus dem Lichtleiter (10) auskoppelbar ist.

## Claims

1. Device for determining the dew point temperature of a measuring gas, having
- a light guide (10),
- a condensation surface (12) whose reflectivity is dependent on the condensation of the measuring gas (4), such condensation surface (12) being located on the light guide (10),
- a light source (31) for emitting light through the light guide (10) onto the condensation surface (12),
- a light sensor (34) for determining the light intensity reflected back by the condensation surface (12) into the light guide (10) and
- means (42) for adjusting the temperature of the condensation surface (12),
- wherein with the light source (31) a light bundle (1) can be generated in the light guide (10), the incidence angle (α) of such light bundle (1) on the condensation surface (12) lying between the critical angle (α_{G, LM}) of the transition between light guide/ measuring gas and the critical angle (α_{G, LK}) of the transition between light guide/condensing phase,
**characterized in that**
- the condensation surface (12) is semihydrophobically formed with a contact angle (Θ) to the condensing phase (6) of the measuring gas (4) between 25° and 110°.

2. Device according to claim 1,
**characterized in that**
the condensation surface (12) is formed semihydrophobically throughout, preferably with a roughly constant contact angle (Θ) to a condensing phase (6) of the measuring gas (4), particularly to water.

3. Device according to one of the claims 1 or 2,
**characterized in that**
the contact angle (Θ) of the semihydrophobic condensation surface (12) to the condensing phase (6) of the measuring gas (4) is greater than 30°, preferably greater than 40°, 50° or 60°.

4. Device according to one of the claims 1 to 3,
**characterized in that**
the contact angle (Θ) of the semihydrophobic condensation surface (12) to the condensing phase (6) of the measuring gas (4) is smaller than 90°.

5. Device according to one of the claims 1 to 4,
**characterized in that**
particularly in the vicinity of the condensation surface (12), the light guide (10) exhibits glass, a semiconductor material, e.g. silicon, and/or a plastics material, e.g. polycarbonate.

6. Device according to one of the claims 1 to 5,
**characterized in that**
the mean roughness of the condensation surface (12) is smaller than 100 nm, particularly smaller than 10 nm or 2 nm.

7. Device according to one of the claims 1 to 6,
**characterized in that**
the specific thermal conductivity of the light guide (10), at least in the vicinity of the condensation surface (12), is lower than 10 W/(K x m), particularly lower than 1 W/(K x m).

8. Device according to one of the claims 1 to 7,
**characterized in that**
the condensation surface (12) has a passivating layer, particularly of SiC.

9. Device according to one of the claims 1 to 8,
**characterized in that**
the light source (31) and/or the light sensor (34) are located on light guide (10), particularly on a back surface (19) facing away from the condensation surface (12).

10. Device according to one of the claims 1 to 9,
**characterized in that**
at least one diaphragm is provided on the light guide (10), particularly between light source (31) and light guide (10) and/or between light guide (10) and light sensor (34).

11. Device according to one of the claims 1 to 10,
**characterized in that**
the light source (31) has a light emitting diode and/or the light sensor (34) has a photodiode.

12. Device according to one of the claims 1 to 11,
**characterized in that**
- the temperature adjustment means (42) are located on the back surface (19) of the light guide (10), such back surface (19) facing away from the condensation surface (12) and
- in the vicinity of the condensation surface (12) and the temperature adjustment means (42), the light guide (10) has a taper (25).

13. Device according to one of the claims 1 to 12,
**characterized in that**
the light guide (10) and the light source (31) are constructed for multiple, internal light reflection in the light guide (10), particularly in the vicinity of the condensation surface (12) and/or the taper (25).

14. Device according to one of the claims 1 to 13,
**characterized in that**
a temperature-dependent conductor (52) is applied, particularly sputtered, on the light guide (10), particularly in the vicinity of the condensation surface (12).

15. Device according to one of the claims 1 to 14,
**characterized in that**
the light is NIR, IR, VIS and/or UV light.

16. Device according to one of the claims 1 to 15,
**characterized in that**
in addition to the light sensor (34) a reference light sensor (37) is provided for determining the light intensity of the light source (31).

17. Device according to claim 16,
**characterized in that**
on the light guide (10) a silvered area (38) is provided for reflecting light of the light source (31) to the reference light sensor (37).

18. Device according to one of the claims 1 to 17,
**characterized in that**
on the light guide (10) a light coupling out area (61) is provided by means of which light emanating from the light source (31), particularly for data transmission purposes, can be coupled out of the light guide (10).

## Revendications

1. Dispositif de détermination de la température de point de rosée d'un gaz de mesure, avec
- un conducteur optique (10),
- une surface de condensation (12) placée sur le conducteur optique (10) et dont la capacité de réflexion dépend de la condensation du gaz de mesure (4),
- une source lumineuse (31) pour envoyer de la lumière, via le conducteur optique (10), sur la surface de condensation (12),
- un capteur optique (34) pour déterminer l'intensité lumineuse réfléchie dans le conducteur optique (10) par la surface de condensation (12), et
- des moyens (42) pour régler la température de la surface de condensation (12),
dans lequel la source lumineuse (31) permet de produire un faisceau lumineux (1) dans le conducteur optique (10), dont l'angle d'incidence (α) sur la surface de condensation (12) est compris entre l'angle limite (α_{G, LM}) de la transition conducteur optique/gaz de mesure et l'angle limite (α_{G, LK}) de la transition conducteur optique/phase condensante,
***caractérisé en* ce *que*** la surface de condensation (12) est réalisée semi-hydrophobe, avec un angle de contact (Θ) vis-à-vis de la phase condensante (6) du gaz de mesure (4) compris entre 25° et 110°.

2. Dispositif selon la revendication 1, ***caractérisé en* ce *que*** la surface de condensation (12) est réalisée continûment semi-hydrophobe, de préférence avec un angle de contact (Θ) approximativement constant vis-à-vis d'une phase condensante (6) du gaz de mesure (4), en particulier vis-à-vis de l'eau.

3. Dispositif selon la revendication 1 ou 2, ***caractérisé en ce que*** l'angle de contact (Θ) de la surface de condensation semi-hydrophobe (12) vis-à-vis de la phase condensante (6) du gaz de mesure (4) est supérieur à 30°, de manière préférée supérieur à 40°, 50° ou 60°.

4. Dispositif selon l'une quelconque des revendications 1 à 3, ***caractérisé en ce que*** l'angle de contact (Θ) de la surface de condensation semi-hydrophobe (12) vis-à-vis de la phase condensante (6) du gaz de mesure (4) est inférieur à 90°.

5. Dispositif selon l'une quelconque des revendications 1 à 4, ***caractérisé en* ce *que*** le conducteur optique (10), en particulier au voisinage de la surface de condensation (12), comprend du verre, un matériau semi-conducteur, par exemple du silicium, et/ou un matériau synthétique, par exemple du polycarbonate.

6. Dispositif selon l'une quelconque des revendications 1 à 5, ***caractérisé en* ce *que*** la rugosité moyenne de la surface de condensation (12) est inférieure à 100 nm, en particulier inférieure à 10 nm ou 2 nm.

7. Dispositif selon l'une quelconque des revendications 1 à 6, ***caractérisé en* ce *que*** la conductibilité thermique spécifique du conducteur optique (10), au moins au voisinage de la surface de condensation (12), est inférieure à 10 W/(K x m), en particulier inférieure à 1 W/(K x m).

8. Dispositif selon l'une quelconque des revendications 1 à 7, ***caractérisé en ce que*** la surface de condensation (12) comprend une couche de passivation, en particulier en SiC.

9. Dispositif selon l'une quelconque des revendications 1 à 8, ***caractérisé en ce que*** la source lumineuse (31) et/ou le capteur optique (34) sont placés sur le conducteur optique (10), en particulier sur une face dorsale (19) opposée à la surface de condensation (12).

10. Dispositif selon l'une quelconque des revendications 1 à 9, ***caractérisé en ce qu'**au* moins un diaphragme est prévu sur le conducteur optique (10), en particulier entre la source lumineuse (31) et le conducteur optique (10) et/ou entre le conducteur optique (10) et le capteur optique (34).

11. Dispositif selon l'une quelconque des revendications 1 à 10, ***caractérisé en ce que*** la source lumineuse (31) comprend une diode électroluminescente et/ou le capteur optique (34) comprend une photodiode.

12. Dispositif selon l'une quelconque des revendications 1 à 11, ***caractérisé***
- ***en ce que*** les moyens (42) de réglage de la température sont placés sur la face dorsale (19) du conducteur optique (10) opposée à la surface de condensation (12), et
- **en ce *que*** le conducteur optique (10) présente un rétrécissement (25) au niveau de la surface de condensation (12) et des moyens (42) de réglage de la température.

13. Dispositif selon l'une quelconque des revendications 1 à 12, ***caractérisé en ce que*** le conducteur optique (10) et la source lumineuse (31) sont conformés pour produire de multiples réflexions internes dans le conducteur optique (10), en particulier au niveau de la surface de condensation (12) et/ou du rétrécissement (25).

14. Dispositif selon l'une quelconque des revendications 1 à 13, ***caractérisé en ce* qu'**un conducteur (52) dépendant de la température est appliqué, en particulier par pulvérisation cathodique, sur le conducteur optique (10), en particulier au niveau de la surface de condensation (12).

15. Dispositif selon l'une quelconque des revendications 1 à 14, ***caractérisé en* ce *que*** la lumière est une lumière NIR, IR, VIS et/ou UV.

16. Dispositif selon l'une quelconque des revendications 1 à 15, *caractérisé en ce qu*'en plus du capteur optique (34), un capteur optique de référence (37) est prévu pour déterminer l'intensité lumineuse de la source lumineuse (31).

17. Dispositif selon la revendication 16, ***caractérisé en ce que**,* sur le conducteur optique (10), est prévue une zone miroir (38) pour réfléchir la lumière de la source lumineuse (31) vers le capteur optique de référence (37).

18. Dispositif selon l'une quelconque des revendications 1 à 17, ***caractérisé en ce que**,* sur le conducteur optique (10), est prévue une zone d'extraction de lumière (61), par laquelle la lumière venant de la source lumineuse (31) peut être extraite du conducteur optique (10), en particulier pour une transmission de données.
